# EUROPEAN PATENT APPLICATION

(11) **EP 1 526 429 A2**
(43) Date of publication of application: **27.04.2005**
(21) Application number: 04023598.8
(22) Date of filing: 04.10.2004
(51) Int. Cl.: G06F 1/00

(54) **Operating system resource protection**

(30) Priority: 24.10.2003 US 513941 P; 15.06.2004 US 868182
(71) Applicant: MICROSOFT CORPORATION, Redmond, WA 98052 (US)
(72) Inventor: Praitis, Edward J., Redmond, Washington 98052 (US); Aaron, Freddie L., Redmond, Washington 98052 (US); Lew, Jonathan C., Redmond, Washington 98052 (US); Kavalam, Jude Jacob, Redmond, Washington 98052 (US); FitzSimons, RoseMarie, Redmond, Washington 98052 (US); Noonan, Timothy D., Redmond, Washington 98052 (US); Tsuryk, Valeriy V., Redmond, Washington 98052 (US); Probert, David B., Redmond, Washington 98052 (US); Sambotin, Dragos C., Redmond, Washington 98052 (US); Fernandes, Genevieve, Redmond, Washington 98052 (US); Li, Eric, Redmond, Washington 98052 (US); Rector, John Austin, Redmond, Washington 98052 (US)
(74) Representative: Grünecker, Kinkeldey, Stockmair & Schwanhäusser Anwaltssozietät

(57) **Abstract**

Granting an application program access to a resource as a function of a privilege associated with the application program. An embodiment of the invention employs a persistent, individual identity associated with the components of an application program or a group of application programs to allow an operating system to identify and differentiate between different application programs or groups of application programs installed on a computing system. The identity associated with each component of an application program enables the identification and removal or uninstallation of the application program. The identity also enables isolation of resources of the application program and protection of operating system resources.

## Description

### CROSS-REFERENCE TO RELATED APPLICATION

This application claims the benefit of U.S. Provisional Application No. 60/513,941, filed October 24, 2003. Filed simultaneously herewith is U.S. non-provisional patent application entitled "Application Identity for Software Products," attomey docket number MS#307048.01 (5102) (which also claims the benefit of U.S. Provisional Application No. 60/513,941, filed October 24, 2003), the entire disclosure of which is incorporated herein by reference.

### TECHNICAL FIELD

Embodiments of the present invention relate to the field of operating systems for computers. In particular, embodiments of this invention relate to managing the installation, execution, and removal of applications by an operating system.

### BACKGROUND OF THE INVENTION

While operating systems have made dramatic strides in improving their usability and reliability, the user experience relating to the installation, management, and removal (i.e., uninstallation) of application programs still needs improvement. For example, an application program may incorrectly configure a system setting during installation or overwrite a file needed by another application program. It may also be difficult for users to uninstall undesirable applications such as ad-ware and spy-ware. Many system crashes and performance degradation (e.g., slow boot times) may also be attributable to application problems. For example, the following situations may cause an application program and possibly the underlying operating system to fail: an incomplete uninstall of an application, over deletion when uninstalling an application program, and improperly stored files.

In some current operating systems, a newly installed application program may overwrite a shared dynamic-link library (DLL) file with an older or newer version needed by the newly installed application program. If the older or newer file is incompatible with the overwritten file, a currently installed application program dependent on the overwritten file may crash when attempting to access the overwritten file.

Accordingly, an improved system and method for managing application impact is desired to address one or more of these and other disadvantages.

### SUMMARY OF THE INVENTION

Embodiments of the invention include a method for allowing an operating system to protect its resources. In an embodiment, the invention includes employing a persistent, individual identity associated with an application program or a group of application programs to allow an operating system to identify and differentiate between the different application programs or groups of application programs and components thereof.

The operating system or other program manipulates the application programs via the identities associated with each of the application programs. For example, the operating system uses the identities to (1) ensure clean uninstalls, (2) prevent an application from accessing a service or performing an action for which the application does not have authorization, (3) virtualize system resources to better isolate applications from each other, (4) enable application impact rollback (e.g., revert file type associations to a pre-application install state), and (5) enable file and registry ownership tracking. Protection mechanisms include, but are not limited to, providing read-only access, logging changes to enable rollback, and virtualizing resources per application and per user. For example, the operating system generates a copy of a write-protected file for an application program that has requested write access to the write-protected file.

In accordance with one aspect of the invention, a method grants an application program access to a resource on a computing system. The method includes receiving a request from an application program for access to a resource identified in the request. The method also includes determining an application identifier for the application program. The method includes identifying a privilege from a manifest as a function of the determined application identifier and the identified resource. The manifest indicates the privilege that the application program has for accessing the identified resource. The method also includes granting the application program access to the identified resource according to the identified privilege.

In accordance with another aspect of the invention, one or more computer-readable media have computer-executable components for granting an application program access to a resource. The components include an interface module to receive a request from an application program for access to a resource identified in the request.
The components also include an identity module to determine an application identifier for the application program to distinguish the application program and components thereof from other application programs. The components also include a filter module to identify a privilege from a manifest as a function of the application identifier determined by the identity module and the identified resource. The manifest indicates the privilege that the application program has for accessing the identified resource. The components also include an access control module to grant the application program access to the identified resource according to the privilege identified by the filter module.

In accordance with yet another aspect of the invention, a computer-readable medium stores a data structure that represents a manifest specifying access rights of an application program to access a plurality of resources. The data structure includes a first field storing a value representing an identity corresponding to the application program. The data structure also includes a second field storing a list of resources associated with the application program. The data structure further includes a third field storing a privilege associated with the identity from the first field and with the list of resources stored in the second field. The privilege defines an access right of the application program to access each resource in the list of resources.

In accordance with still another aspect of the invention, a system grants an application access to a system resource. The system includes a memory area to store a manifest. The manifest maps an application identifier and a resource to a privilege. The application identifier is associated with an application program. The system also includes a processor configured to execute computer-executable instructions to determine, responsive to a request from the application program for the resource, the privilege from the manifest stored in the memory area as a function of the application identifier and the resource. The processor is further configured to execute computer-executable instructions to grant the application program access to the resource according to the determined privilege.

In accordance with another aspect of the invention, a method uninstalls a particular application program from a computing system. The particular application program has at least one file associated therewith. The particular application program is one of a plurality of application programs installed on the computing system. The method includes receiving a request to uninstall the particular application program. The method also includes determining an identifier associated with the particular application program. The method further includes identifying, via the determined identifier, a file associated only with the particular application program of the plurality of application programs. The identified file has the determined identifier associated therewith. The method also includes deleting the identified file.

Alternatively, the invention may comprise various other methods and apparatuses.

Other features will be in part apparent and in part pointed out hereinafter.

### BRIEF DESCRIPTION OF THE DRAWINGS

FIG. 1 is an exemplary embodiment of an operating system providing an application program with access to a resource.

FIG. 2 is an exemplary flow chart illustrating operation of an access control method.

FIG. 3 is an exemplary flow chart illustrating a mitigation architecture for protecting various resources.

FIG. 4 is an exemplary flow chart illustrating operation of a method of providing access control for files, system settings, and extensions.

FIG. 5 is an exemplary flow chart illustrating operation of a method of providing access control for system settings.

FIG. 6 is an exemplary flow chart illustrating operation of the removal of an installed application program from a computing system.

FIG. 7 is a block diagram illustrating one example of a suitable computing system environment in which the invention may be implemented.

Corresponding reference characters indicate corresponding parts throughout the drawings.

### DETAILED DESCRIPTION OF THE INVENTION

In one embodiment, the invention provides a method for protecting resources. In particular, functionality of the operating system enables the declaration of protection for files and system settings. The declared protection is persisted and enforced by the operating system or other application program through a set of actions the operating system may use during the application lifecycle to manage, track, predict, and mitigate the installation, running, servicing, and removal of application programs. Resource protection provides referential integrity of the vital system data (e.g., file associations), addresses application fragility issues to improve reliability and consistency by tracing and isolating access to resources by each application program, and manages the impact of interactions by the system and applications with protected resources. For example, embodiments of the invention may be used to provide security against applications that have been infected by a virus or a worm. Embodiments of the invention are operable with any operating system model to provide extensibility and enable integration. The resource protection strategies and implementation of embodiments of the invention also prevent an application installer from accidentally or maliciously modifying or replacing vital system resources. Embodiments of the invention may be combined with other strategies for protecting system resources. For example, a computing system may implement strategies including a combination of lock down, isolation, virtualization, transaction, and sandboxing.

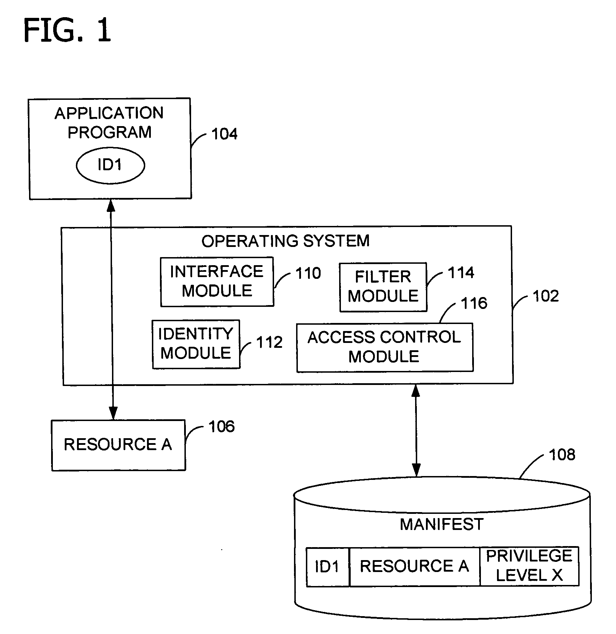

Referring first to FIG. 1, an exemplary embodiment of an operating system 102 provides an application program 104 with access to a resource per a manifest 108. A resource includes, but is not limited to, a file, folder, process, thread, system setting, named object, an application programming interface (API), a specific code path, a library of executable routines, operating system property value, and an operating system resource. A named object includes any object identified by alphabetic, numeric, alphanumeric, or non-human readable (e.g., a globally unique identifier) data. For example, any object that may be protected by a user identity may be protected by an application identity (e.g., a network socket). For example, a number of APIs and code paths provide send mail capability, and access to these APIs and code paths might be restricted. In another example, the ability to reboot the system is restricted. Resources also include the system's name space (e.g., the 'names' themselves), not just specific named objects. For example, reserving or 'squatting' on a name before an object is created with the name creates both fragility and security issues.

In one embodiment, the manifest such as manifest 108 presented by the application program (e.g., application program 104) indicates the privileges that the application program would like to have. In operation, the operating system may grant or deny some of the requested privileges resulting in a computed or effective manifest that the operating system maintains for the application program.

Each application program such as application program 104 is assigned an application identifier to distinguish the application program from other application programs. In one embodiment, the application identifier is assigned to a group of application programs to enable each application program in the group of application programs to have the same access or privilege to resources as the other application programs in the group. In FIG. 1, the application program 104 has identifier ID1 associated therewith. The operating system 102 intercepts an attempt by the application program 104 to access a resource such as Resource A 106. The operating system 102 consults the manifest 108 to determine the privilege or access allowed for the application program 104 for Resource A 106. In this example, a memory area stores the manifest 108. The manifest 108 maps an application identifier and a resource to a privilege. The manifest 108 stores the privilege (e.g., privilege X) as a function of the application identifier (e.g., ID1) and the resource (e.g., Resource A 106). Privilege X may correspond, for example, to read-only access. The operating system 102 provides the application identifier with access to Resource A 106 according to the determined privilege.

In one embodiment, the operating system 102 stores or has access to one or more computer-executable components on a computer-readable media. A processor associated with the operating system 102 is configured to execute the computer-executable components or other computer-executable instructions to determine, responsive to a request from the application program 104 for the resource, the privilege from the manifest 108 stored in the memory area as a function of the application identifier and the resource. The processor is further configured to execute computer-executable instructions to grant the application program 104 access to the resource or a copy thereof according to the determined privilege.

In particular, the computer-executable components grant the application program 104 with access to the resource. In the particular embodiment of FIG. 1, the components include an interface module 110, an identity module 112, a filter module 114, and an access control module 116. The modules in FIG. 1 may exist separate from and independent of the operating system 102. Further, the functionality and structure of embodiments of the invention may be organized into any quantity of modules, components, or the like. For example, the modules may be distributed.

The interface module 110 receives a request from the application program 104 for access to the resource identified in the request. In one embodiment, the interface module 110 receives the request from the application program 104 for access to one or more of the following: a file, a directory, and a system setting (e.g., a registry entry). The identity module 112 determines an application identifier for the application program 104 to distinguish the application program 104 and components thereof from other application programs. In one embodiment, the identity module 112 determines the application identifier (e.g., an isolation identifier) for a group of application programs. As the application program 104 may include a plurality of files and system settings, the identity module 112 determines the application identifier associated with each of the plurality of files and system settings representing the application program 104. The filter module 114 identifies a privilege from the manifest 108 as a function of the application identifier determined by the identity module 112 and the identified resource. The manifest 108 indicates the privilege that the application program 104 has for accessing the identified resource. The access control module 116 grants the application program 104 access to the identified resource according to the privilege identified by the filter module 114. In one embodiment, a configuration module receives an application manifest from an installation medium associated with the application program 104. The application manifest represents a list of files and resource changes (e.g., system settings) associated with the application program 104. The configuration module may update an operating system manifest with the data contained in the application manifest. Alternatively, the configuration module may maintain each application manifest for each installed application.

### Manifest

The manifest 108 includes a list of items (e.g., files and resource changes) or objects associated with an application program 104 or an operating system such as operating system 102. Alternatively, the list of items associated with application program 104 may be stored in a configuration file or store for each resource provider. In another embodiment, the creator of the object specifies the access privileges directly on the object.

The manifest 108 may also include a list of privileges for resources associated with the application program 104 or operating system 102. For example, an author of the application program 104 may specify in the manifest the privileges to resources of the operating system 102 and/or to resources that the application program 104 may create. Alternatively, the manifest may simply store the identity information associated with the application program 104. In another example, an installation medium storing the application program 104 to be installed may also store an application manifest listing items associated with the application program 104 and privileges associated with application private resources. Third party application vendors or personnel responsible for deployment of the application program 104 may create the application manifest. In another example, an operating system manifest stores a list of items associated with the application programs installed with the operating system 102. The operating system manifest may further store a list of components associated with the operating system 102. In one embodiment, the operating system manifest represents the aggregation of the protection behaviors for each of the operating system components or installed application programs. The aggregated manifest defines the types of interaction that will be permitted for each file, directory, and system setting.

The operating system 102 is self-describing in that it specifies how it wants to be protected and how operating system components and other components may interact and extend the system. In one embodiment of the invention, it is possible to declare the type of protection behavior that should be enforced by the operating system 102 for every item or resource (e.g., file, directory, registry key and value, driver, etc.) that is part of the operating system 102.

The manifest 108 is stored as a data structure on a computer-readable medium. The manifest 108 specifies access rights of application programs such as application program 104 to access a plurality of resources. The exemplary data structure in FIG. 1 includes a first field storing a value (e:g., ID1) representing an identity corresponding to the application program 104. For example, the first field may store a value based on one or more of the following: a version, a central processing unit, and a public key. The data structure also includes a second field storing a list of resources (e.g., Resource A 106) associated with the application program 104. For example, the second field may store a list of resources such as the following: a file, a directory, and a system setting. The data structure also includes a third field storing a privilege (e.g., Privilege X) or other declaration of intent associated with the identity from the first field and with the list of resources stored in the second field. The privilege defines an access right of the application program 104 to access each resource in the list of resources.

An author of the application may create a manifest such as manifest 108 with a trust information section. An application author may also assign a strong name to the application and sign the application's manifest (e.g., with a digital signature or certificate). When an application is installed, the operating system 102 may be configured to check one or more certificate stores to validate the certificate and signature of the application manifest. In one embodiment, only signed driver packages are installed. For example, an enterprise may have its own certificate store. Similarly, a particular system may have a certificate store against which an application manifest may be validated. Once validated, the operating system 102 may be configured to manage trust actions based on the manifest data and pre-configured default policies.

A manifest such as manifest 108 may be signed in several ways. For example, manifests may be signed using an authenticode process with the certificate kept in a store for verification. Domain administrators may also sign manifests for their particular enterprise or domain. For example, a deployment manifest may be used to specify which applications are signed for a particular installation. Local administrators may also sign manifests. Each individual machine may also be configured with a signing key.

In one embodiment, the manifest 108 may include both a weak name and a strong name. The weak name may correspond to a traditional application file name, while the strong name may correspond to the file name, version number, culture, and public key. In another embodiment, the strong name may be a hash of the module signed private key. In yet another embodiment, the strong name may be a public key token.

For example, the following XML may represent one strong name for the manifest 108.
<assemblyldentity
version=" 1.0.0.0"
processorArchitecture="x86"
name="SampleApp"
publicKeyToken="0123456789abcdef"
type="typeA"/>

The following is a sample trust information section of one embodiment of the manifest 108.
<trustInfo>
<security>
<requestedPrivileges>
<requestedExecutionLevel
leastPrivileged="true"
adminPrivileged="true"
requireDefaultDesktop="false"/>
</requestedPrivileges>
</security>
</trustInfo>

For applications that do not have the manifest 108, the operating system 102 may be configured to generate the manifest 108 with requested privileges set according to a predefined default. For example, the manifest 108 may be configured to request the least privileged level of user access.

Alternatively or in addition, the operating system may also observe the actions of an application and customize a manifest to provide only the privileges that the application actually uses. After a number of executions of the application, the manifest is locked and explicit user input or administrator policy is required to extend the privileges granted by the manifest. In some embodiments, the likelihood that a vulnerable application will be compromised soon after installation is relatively low compared to the possibility that the application will be compromised later. If the application is compromised after the manifest is locked, the behavior of the compromised application is limited to the behaviors allowed by the manifest, which were determined by the uncompromised behavior of the application.

Methods for protecting resources using application identities are next described.

### Providing Access Control

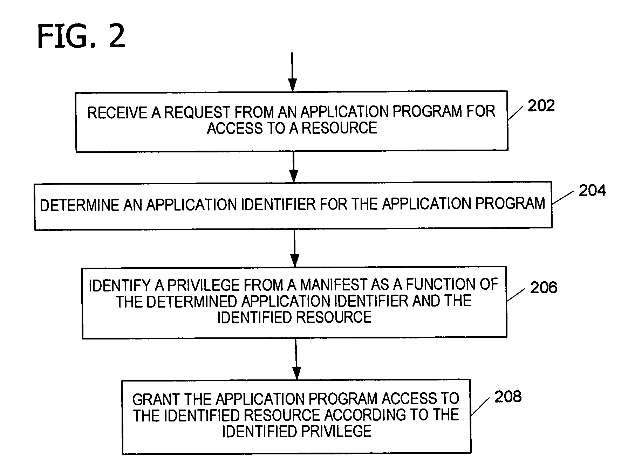

Referring next to FIG. 2, an exemplary flow chart illustrates operation of an access control method. In one embodiment, the invention grants an application program access to a resource on a computing system. The method includes receiving a request from an application program for access to a resource identified in the request at 202, determining an application identifier for the application program at 204, identifying a privilege from a manifest (e.g., the operating system manifest and/or the application program manifest) as a function of the determined application identifier and the identified resource at 206, and granting the application program access to the identified resource according to the identified privilege at 208. In one embodiment, determining the application identifier for the application program at 204 includes tagging every file, folder, system setting change (e.g., registry key and value) or resource with a unique, consistent, persistent, repeatable identifier.

In one embodiment, an operating system executes the method illustrated in FIG. 2. In another embodiment, an application program or service separate from the operating system executes the method illustrated in FIG. 2. One or more computer-readable media have computer-executable instructions for performing the method illustrated in FIG. 2.

Various exemplary privileges or other forms of access are next described with reference to a sample mitigation architecture for protecting resources.

### Exemplary Mitigation Architecture

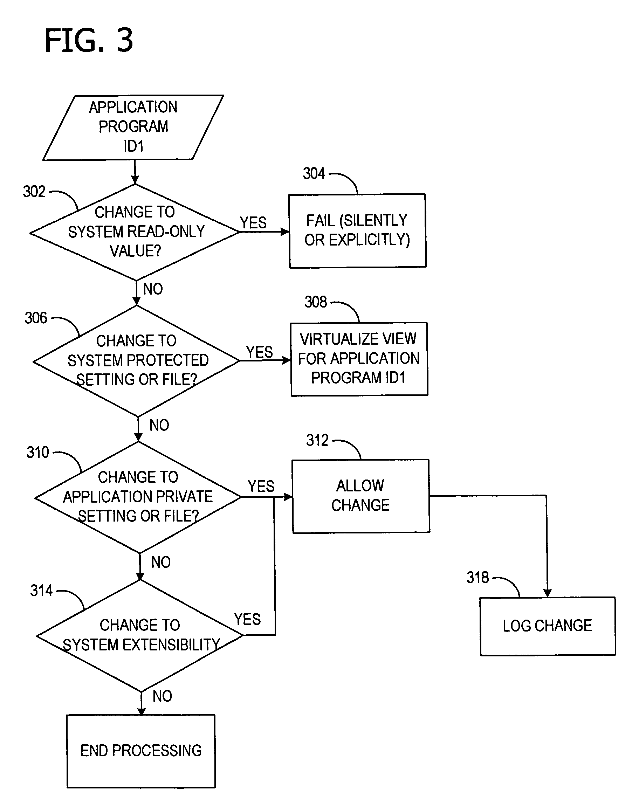

Referring next to FIG. 3, an exemplary flow chart illustrates a mitigation architecture for protecting various resources. In one embodiment, the method illustrated in FIG. 3 enforces the resource privileges described in the manifest based on the application identifier of the application program attempting to access the resources. While certain privileges are described herein, various privileges, levels of privilege, or access not described herein are within the scope of the invention. Likewise, while certain resources are described herein, the various resources not described herein are within the scope of the invention.

In FIG. 3, an application program such as application program with identifier ID1 requests access to various resources. An embodiment of the invention receives the request and processes the request according to the privilege or access specified for the application program for the resource. In the example of FIG. 3, the application program has access to some operating system resources (e.g., files and settings) at a read-only privilege. If the application program sends a request for read access to one of these resources, an embodiment of the invention grants the application program read-only access to the one resource. If the application program sends a request to modify one of these read-only resources at 302, an embodiment of the invention denies the application program access to the one resource. The request fails silently (e.g., no response returned to the application program) or explicitly (e.g., a negative response is returned to the application program) at 304. The application program also has access to application private resources (e.g., those files and settings associated with the application program) at a read-write privilege. Because these resources are associated with the application program, modification of these resources generally does not raise operating system fragility issues. The operating system has little knowledge and interest in the semantics of these resources.

The application program has access to other operating system resources at a protected privilege. If the application program sends a request to modify one of these protected operating system resources (e.g., settings or files) at 306, an embodiment of the invention returns a virtual view of the protected resource for the application program at 308. In particular, for the protected privilege, an embodiment of the invention generates a copy, if one does not already exist, of the requested resource for read-write access by the application program. In one embodiment in which a copy does not yet exist, a copy is not generated if the request from the application program is only for read access. The copy of the resource is for use only by the application program or group of application programs having the same application identifier. The application identifier allows an embodiment of the invention to provide application programs with different application identifiers their own virtual view or copy of one or more resources. For example, the operating system maintains its own copy of a system setting while an application program writing a value to the system setting receives its own copy of the system setting. In some exemplary embodiments, different applications may receive different virtual views of system settings (e.g., registry entries). Depending on the type of system protection desired (e.g., by a user), a resource may be virtualized per user and/or per application program. Changes to a virtualized resource by an application program with a particular application identifier have no impact (e.g., are not visible) to application programs with other application identifiers. By providing individual applications or groups of applications with their own view of selected system resources, the operating system may prevent one application program from overwriting or otherwise disrupting resources needed by other application programs.

In one embodiment, an application program uses a virtualized copy of a resource during installation of the application program on a computing system. For example, the application program may apply a system setting to the computing system using a generated copy of a file storing the system setting.

The application program has access to application private resources. Application private resources include resources that are specific to the application program. The operating system and other application programs are generally unaffected by application private resources. If the application program sends a request to modify an application private resource at 310, an embodiment of the invention allows and processes the request at 312.

The application program may send a request to change system extensibility (e.g., add functionality to the operating system) at 314. In one embodiment, an embodiment of the invention allows the requested change at 312.

Changes to system extensibility and application private resources (e.g., files and system settings) may be logged or otherwise recorded at 318. Generally, system extensibility changes provide additional functionality to the operating system without modifications to the operating system. Recording the system extensibility changes and changes to application private resources enables the rollback of the changes as well as the complete removal or uninstallation of the application program associated with the changes.

### Example Mitigation Strategy

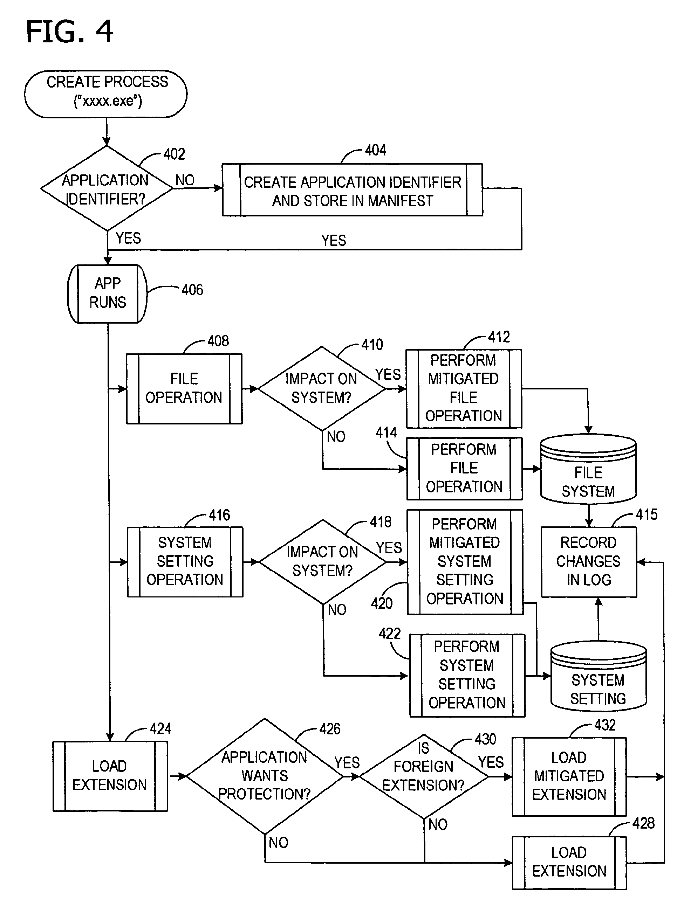

Referring next to FIG. 4, an exemplary flow chart illustrates operation of a method of providing access control for files, system settings, and extensions. In the example of FIG. 4, an operating system implements the method. However, an application program or service not associated with the operating system may also implement the method. In FIG. 4, a process is created to execute an application program (e.g., xxxx.exe) via a function such as CreateProcesso(). The operating system determines if there is an application identifier associated with the application program at 402. If not, the operating system determines the application identifier and persists this information (e.g., stores the determined application identifier in the manifest) at 404. The application program executes at 406 and performs an operation. The operating system analyzes the operation. For example, in one embodiment, only authorized trusted install processes executing with special privileges may add, modify or delete in protected areas. Application programs are blocked from creating or modifying data in protected areas.

In the embodiment of FIG. 4, if the operation is a file operation at 408, the operating system determines if the file operation will have an impact on a file (e.g., the file operation modifies the file) at 410. If the file operation will not have an impact on the file, the operating system allows the file operation to be performed on the file system at 414. If the file operation will have an impact on the file, the operating system performs a mitigated file operation at 412 according to a mitigation strategy such as illustrated in FIG. 3. The change to the file system, if any, is recorded in a log at 415.

If the operation is a system setting operation at 416, the operating system determines if the system setting operation will have an impact on a system setting (e.g., the system setting operation modifies the system setting) at 418. If the system setting operation will not have an impact on the system setting, the operating system allows the system setting operation to be performed on the system setting at 422. If the system setting operation will have an impact on the system setting, the operating system performs a mitigated system setting operation at 420 according to a mitigation strategy such as illustrated in FIG. 3. The change to the system setting, if any, is recorded in a log at 415.

If the operation represents a request to load an extension to the operating system at 424, the operating system determines if the application program (e.g., xxxx.exe) desires protection (e.g., to enable an "undo") at 426. For example, the application program may explicitly inform the operating system of a desire for protection. If the application program does not want protection, the operating system allows the extension to load at 428. If the application program indicates that protection is desired, the operating system determines if the extension is a foreign extension (e.g., supplied by a third party) at 430. If the extension is not foreign, the operating system allows the extension to load at 428. If the extension is foreign, the operating system performs a mitigated extension load at 432 according to a mitigation strategy such as illustrated in FIG. 3. The extension load may be recorded in a log. For example, the recording may be configurable by a user of the computing system executing the operating system.

With virtualization, an application creates and modifies objects in their own local namespace, while the operating system creates and modifies objects in the global namespace. There is one global namespace, and potentially multiple local namespaces. For create operations, the application creates the object in its local namespace. When an application attempts to modify an object, the operating system checks if the object resides in the local namespace for the application. If the local object exists, the application opens the object in its local namespace. If the application attempts to modify an object in the global namespace, the operating system copies the object into the application's local namespace and allows the operation to occur on that local object. If the resource does not exist in the local or global namespace, the open operation fails.

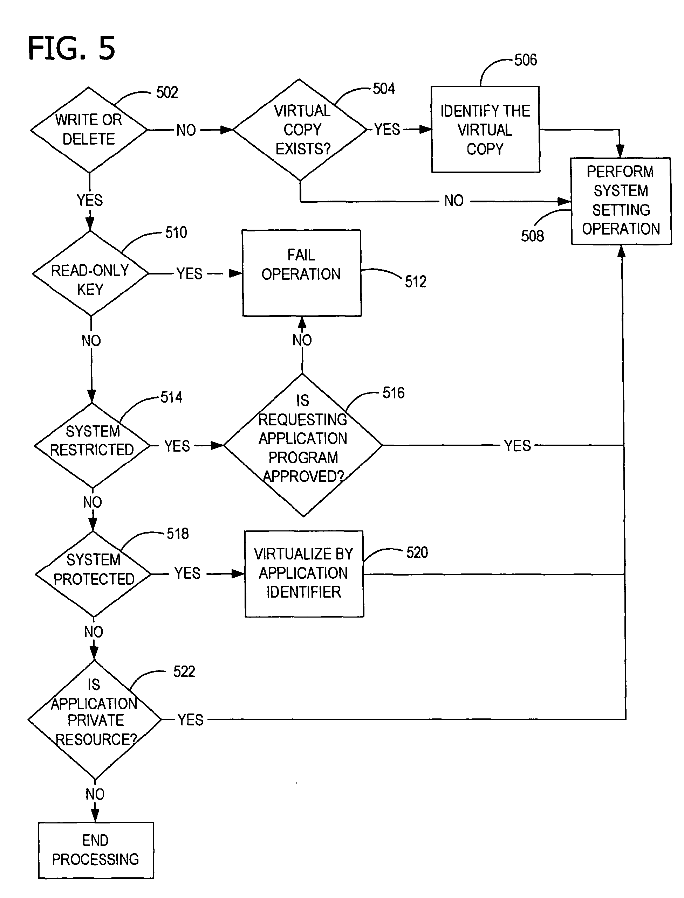

Referring next to FIG. 5, an exemplary flow chart illustrates operation of a method of providing access control for system settings. Even though FIG. 5 illustrates an example related to system settings, the virtualization aspect of the invention may be utilized for other objects (e.g., named objects) and namespaces. In FIG. 5, an embodiment of the invention such as an operating system analyzes an operation on a system setting requested by, for example, an application program. In particular, the operating system determines if the requested operation will write or delete a system setting at 502. If the requested operation will not write or delete a system setting (e.g., read-only access is requested), the operating system determines if a virtual copy of the system setting currently exists at 504. If a virtual copy exists, the operating system identifies the virtual copy at 506 and performs the requested operation on the virtual copy of the system setting at 508. If a virtual copy does not exist, the operating system performs the requested operation on the system setting at 508.

If the requested operation will write or delete a system setting, the operating system determines if the requesting application program is associated with a read-only key (e.g., the requesting application program is not a trusted installer) at 510. If the requesting application program is associated with read-only access (e.g., via an access control list maintained by the operating system), the operating system will fail or deny the requested operation at 512. If the requesting application program is not associated with a read-only access, the operating system determines if the requested operation will write or delete a system-restricted setting at 514. If the requested operation will write or delete a system restricted setting, the operating system determines if the requesting application program is approved to perform the operation at 516. For example, the operating system may determine if the requesting application program has administrator privileges on the computing system. If the requesting application program is approved to perform the operation, the operating system will perform the requested operation at 508. If the requesting application program is not approved to perform the operation, the operating system will fail or deny the requested operation at 512.

If the requested operation will not write or delete a system restricted setting, the operating system determines if the requested operation is for a protected setting (e.g., a copy of a system setting associated with the requesting application program) at 518. If the operating system determines that the requested operation is for a protected setting, the operating system virtualizes the protected setting by the application identifier of the requesting application program at 520. That is, the operating system identifies the virtual copy of the system setting and performs the requested operation on the identified, virtual copy of the system setting at 508. If the operating system determines that the requested operation is not for a protected setting, the operating system determines if the requested operation is for a private setting (e.g., a system setting associated with the requesting application program) at 522. If the operating system determines that the requested operation is for a private setting, the operating system performs the requested operation on the private system setting at 508. If the operating system determines that the requested operation is not for a private setting, the operating system ends processing and fails the request silently or explicitly.

When the application attempts to delete an object from the local namespace and a global object with the same name exists, the system marks the local object as deleted but leaves that object in the namespace. Thus, the system is able to detect that the application's queries for that object should not see that object's name. When the application attempts to delete an object that exists in the local namespace but not the global namespace, the system deletes the local object. Depending on the operating system configuration, deleting a global object may result in deleting all the corresponding local objects. The system may allow the application to designate whether their corresponding objects should get deleted in this manner, and the resource provider stores that designation on the local object. Also, adding a global object may result in deleting all the corresponding objects marked as deleted from all local namespaces.

With this design, the application thinks that it is working in the global namespace, but in reality, it works in its own namespace. The system handles full path queries, enumerations, and other operations to make the application think that it is working in the global namespace. For example, namespace enumeration includes listing all files under a particular directory. The system queries all the objects in the specified namespace (e.g., starting first with the local namespace, then the global namespace). The system ignores duplicated objects with the global namespace enumeration found in the local namespace. Enumeration also ignores the objects marked as deleted from the local namespace and its corresponding global namespace object.

For applications that expect to share resources, the operating system may place the applications in the same virtualization application group (e.g., same isolation identity). Alternatively, the operating system may specify that a particular part of the namespace should not be virtualized. In yet another alternative, the applications specify a portion of their virtualized namespace that other applications may access. The client application specifies the applications for which access is desired. When the client application accesses a shared virtualized namespace, the operating system searches the corresponding exported namespace of the target applications.

In some environments, the operating system may want to have multiple virtualization layers. There might be a virtualization layer per user and virtualization layer per application group. Various ordering of the multiple virtualization layers are within the scope of this invention. In this example, the user virtualization layer takes precedence over the application virtualization layer. Therefore, query requests and open requests for an object first check the current user's virtualization layers, then the current application group's virtualization layer, and finally the global namespace. The operating system returns the first object found or no object if the object does not exist in any of the virtualization layers or global namespace. Likewise for write operations, the operating system first opens the object. If the object exists in the highest precedence layer, then the write operation occurs on that object. If the object does not exist in the highest precedence layer, then the object gets copied into the highest precedence layer and the write operation occurs on the copied object. Create operations occur at the highest precedence layer, though operating systems in some embodiments may allow code to specify a particular virtualization layer as a preference.

Similarly, when deleting an object, the operation occurs at the highest precedence virtualization layer, though operating systems in some embodiments may allow code to specify a particular virtualization layer as a preference. Once the exact object is found, the operating system checks if the object exists in any applicable lower precedence namespace. If the object does exist in a lower precedence namespace, the intended delete object is mark as "deleted" and stays in its namespace. If the object does not exist in a lower precedence namespace, the object is deleted and removed from that namespace. In some configurations, the operating system may delete corresponding object from higher precedence namespaces. The creator of the higher precedence object, however, may designate the object to not be deleted in that case.

When adding an object to a lower precedence namespace, the operating system removes all corresponding objects marked as deleted from the higher precedence namespaces. The search and removal starts from the target namespace up to the next applicable higher precedence layer until the search finds a corresponding object that is not marked as deleted or has searched all the applicable layers.

Enumeration operations account for all the applicable visualization layers for the context and global namespace. The enumeration starts from the highest precedence applicable namespace and moves down to the global namespace. As the enumeration encounters an object marked as deleted, the enumeration for that object is ignored in lower precedence namespaces. The enumeration also ignores corresponding objects found previously in higher precedence namespaces.

### Internal Object Protection for the Operating System

The operating system creates various objects. Some of the objects are intended for access by applications and others (e.g., internal objects) are only accessible by operating system components. The operating system defines the access rights (e.g., open and read access) for the objects.

In one embodiment, internal operating system objects should only be accessible by internal operating system components. To prevent external code from accessing the internal objects, the operating system marks the internal object for access only by internal operating system components. The runtime objects, running as internal operating system code, get associated with the internal operating system identity. Therefore, when a runtime object attempts to access an internal object, the operating system checks if the runtime object is associated with the internal operating system identity. If the runtime object has the internal operating system identity, the operating system allows the access. Otherwise, the operating system implements appropriate action. Appropriate action may include rejecting the access, logging the access attempt, etc.

When an internal operating system component creates an object, the object is marked for access only by internal operating system components unless the creator specifically marks the object as available for external access. The operating system may mark internal objects offline using resource information from a store, manifest, configuration file, digital signature, etc.

Some operating system components are classified as middleware components, which means that even though they are part of the operating system, they should not access internal objects except for some special expectations that external applications are also allowed to access. The operating system in one embodiment would like the middleware components to stop using the special exception internal object and migrate over to external objects. To address this issue, the operating system associates a middleware application identity with the middleware components. The special exception internal objects are marked additionally with the deprecated attribute. When a middleware component accesses the deprecated object, the system responds with the appropriate action such as audit the access and/or block the access. The middleware deprecated resource detection may be applied more generally for deprecating external objects or other external objects or other internal objects.

### Removal of Application Programs

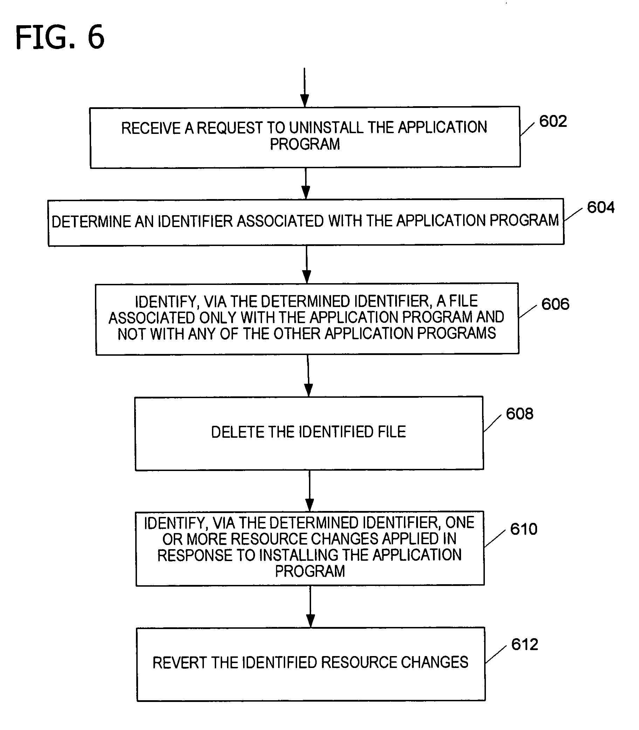

Referring next to FIG. 6, an exemplary flow chart illustrates a method for performing an application undo using application identity information. In particular, the flow chart illustrates a method of completely removing an installed application program from a computing system via an application identifier associated with the application program and components (e.g., files and resources) thereof. While existing application programs may currently support an uninstall function, current operating systems lack a mechanism to ensure that the components associated with a particular application program are removed during the uninstall process. An embodiment of the invention maintains a data store (e.g., a log) that tracks which files are associated with particular application programs. Thus, when an application is uninstalled, the operating system identifies and deletes any files left behind by the uninstall process (e.g., including those that have been virtualized in the application's namespace). This provides a more complete uninstall of the application program by uninstalling all elements of the application including those elements created by extending or modifying the behavior of the operating system or in other (e.g., lower) levels of visualization. This method also helps to remove spy-ware, ad-ware, or other unwanted application programs that often accompany an installed application after the application program is uninstalled from the computing system.

In one embodiment, the particular application program to be removed is one of a plurality of application programs installed on the computing system. An embodiment of the invention receives a request to uninstall the particular application program at 602. The request may originate from, for example, a user of the computing system. Alternatively, the request may be generated by an upgrade utility that uninstalls a previous version of an application program before installing a current version of the operating system. An embodiment of the invention determines an identifier associated with the particular application program at 604. For example, the identifier may be part of the application program or stored separately in a memory area. An embodiment of the invention identifies, via the determined identifier, one or more files associated only with the particular application program at 606. That is, the identified files are not associated with any of the other application programs installed on the computing system. As each file on the system has at least one application identifier associated therewith, the identification of the files associated only with the particular application program results from performing a search for the determined identifier. An embodiment of the invention deletes the identified file at 608. In one embodiment, the invention avoids deleting any user files (e.g., word processing documents, spreadsheet documents).

Additionally, system settings or resource changes applied in response to installing the particular application program are identified at 610 and reverted at 612. For example, during installation of an application program, any system settings applied to the computing system are logged and maintained by an embodiment of the invention. The changes made by an application to files and system settings are tagged for ownership tracking. The log associates each of the changes with the application identifier of the application program being installed. In one embodiment, the log is maintained to allow the rollback of one or more of the changes. For example, a user may wish to undo the most recent change made to the system. In another example, the operating system performs a complete uninstall of a particular application program by rolling back the changes associated with the particular application program. During removal or uninstallation of the application program, an embodiment of the invention uses the determined identifier to identify and revert or otherwise remove the applied settings or changes associated with the application identifier of the application program being uninstalled. For example, a change to a file type association may be logged so that uninstalling an application program does not leave a particular file type without an associated application program. That is, if a file type association is made during installation of the application program, the file type association is reverted when the application program is uninstalled.

### Exemplary Operating Environment

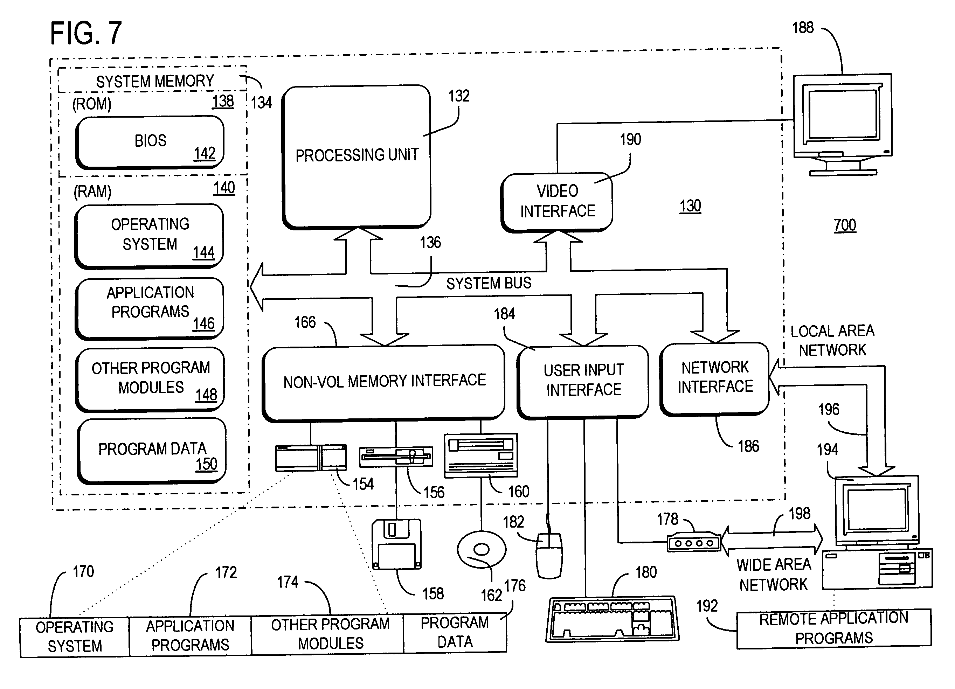

FIG. 7 shows one example of a general purpose computing device in the form of a computer 130. In one embodiment of the invention, a computer or other computing system such as the computer 130 is suitable for use in the other figures illustrated and described herein. Computer 130 has one or more processors or processing units 132 and a system memory 134. In the illustrated embodiment, a system bus 136 couples various system components including the system memory 134 to the processors 132. The bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 130 typically has at least some form of computer readable media. Computer readable media, which include both volatile and nonvolatile media, removable and non-removable media, may be any available medium that may be accessed by computer 130. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information and that may be accessed by computer 130. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of the any of the above are also included within the scope of computer readable media.

The system memory 134 includes computer storage media in the form of removable and/or non-removable, volatile and/or nonvolatile memory. In the illustrated embodiment, system memory 134 includes read only memory (ROM) 138 and random access memory (RAM) 140. A basic input/output system 142 (BIOS), containing the basic routines that help to transfer information between elements within computer 130, such as during start-up, is typically stored in ROM 138. RAM 140 typically contains data and/or program modules that are immediately accessible to and/or presently being operated on by processing unit 132. By way of example, and not limitation, FIG. 7 illustrates operating system 144, application programs 146, other program modules 148, and program data 150.

The computer 130 may also include other removable/non-removable, volatile/nonvolatile computer storage media. For example, FIG. 7 illustrates a hard disk drive 154 that reads from or writes to non-removable, nonvolatile magnetic media. FIG. 7 also shows a magnetic disk drive 156 that reads from or writes to a removable, nonvolatile magnetic disk 158, and an optical disk drive 160 that reads from or writes to a removable, nonvolatile optical disk 162 such as a CD-ROM or other optical media. Other removable/non-removable, volatile/nonvolatile computer storage media that may be used in the exemplary operating environment include, but are not limited to, magnetic tape cassettes, flash memory cards, digital versatile disks, digital video tape, solid state RAM, solid state ROM, and the like. The hard disk drive 154, and magnetic disk drive 156 and optical disk drive 160 are typically connected to the system bus 136 by a nonvolatile memory interface, such as interface 166.

The drives or other mass storage devices and their associated computer storage media discussed above and illustrated in FIG. 7, provide storage of computer readable instructions, data structures, program modules and other data for the computer 130. In FIG. 7, for example, hard disk drive 154 is illustrated as storing operating system 170, application programs 172, other program modules 174, and program data 176. Note that these components may either be the same as or different from operating system 144, application programs 146, other program modules 148, and program data 150. Operating system 170, application programs 172, other program modules 174, and program data 176 are given different numbers here to illustrate that, at a minimum, they are different copies.

A user may enter commands and information into computer 130 through input devices or user interface selection devices such as a keyboard 180 and a pointing device 182 (e.g., a mouse, trackball, pen, or touch pad). Other input devices (not shown) may include a microphone, joystick, game pad, satellite dish, scanner, or the like. These and other input devices are connected to processing unit 132 through a user input interface 184 that is coupled to system bus 136, but may be connected by other interface and bus structures, such as a parallel port, game port, or a Universal Serial Bus (USB). A monitor 188 or other type of display device is also connected to system bus 136 via an interface, such as a video interface 190. In addition to the monitor 188, computers often include other peripheral output devices (not shown) such as a printer and speakers, which may be connected through an output peripheral interface (not shown).

The computer 130 may operate in a networked environment using logical connections to one or more remote computers, such as a remote computer 194. The remote computer 194 may be a personal computer, a server, a router, a network PC, a peer device or other common network node, and typically includes many or all of the elements described above relative to computer 130. The logical connections depicted in FIG. 7 include a local area network (LAN) 196 and a wide area network (WAN) 198, but may also include other networks. LAN 136 and/or WAN 138 may be a wired network, a wireless network, a combination thereof, and so on. Such networking environments are commonplace in offices, enterprise-wide computer networks, intranets, and global computer networks (e.g., the Internet).

When used in a local area networking environment, computer 130 is connected to the LAN 196 through a network interface or adapter 186. When used in a wide area networking environment, computer 130 typically includes a modem 178 or other means for establishing communications over the WAN 198, such as the Internet. The modem 178, which may be internal or external, is connected to system bus 136 via the user input interface 184, or other appropriate mechanism. In a networked environment, program modules depicted relative to computer 130, or portions thereof, may be stored in a remote memory storage device (not shown). By way of example, and not limitation, FIG. 7 illustrates remote application programs 192 as residing on the memory device. The network connections shown are exemplary and other means of establishing a communications link between the computers may be used.

Generally, the data processors of computer 130 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the steps described below in conjunction with a microprocessor or other data processor. The invention also includes the computer itself when programmed according to the methods and techniques described herein.

For purposes of illustration, programs and other executable program components, such as the operating system, are illustrated herein as discrete blocks. It is recognized, however, that such programs and components reside at various times in different storage components of the computer, and are executed by the data processors) of the computer.

Although described in connection with an exemplary computing system environment, including computer 130, the invention is operational with numerous other general purpose or special purpose computing system environments or configurations. The computing system environment is not intended to suggest any limitation as to the scope of use or functionality of the invention. Moreover, the computing system environment should not be interpreted as having any dependency or requirement relating to any one or combination of components illustrated in the exemplary operating environment. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

The invention may be described in the general context of computer-executable instructions, such as program modules, executed by one or more computers or other devices. Generally, program modules include, but are not limited to, routines, programs, objects, components, and data structures that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

An interface in the context of a software architecture includes a software module, component, code portion, or other sequence of computer-executable instructions. The interface includes, for example, a first module accessing a second module to perform computing tasks on behalf of the first module. The first and second modules include, in one example, application programming interfaces (APIs) such as provided by operating systems, component object model (COM) interfaces (e.g., for peer-to-peer application communication), and extensible markup language metadata interchange format (XMI) interfaces (e.g., for communication between web services).

The interface may be a tightly coupled, synchronous implementation such as in Java 2 Platform Enterprise Edition (J2EE), COM, or distributed COM (DCOM) examples. Alternatively or in addition, the interface may be a loosely coupled, asynchronous implementation such as in a web service (e.g., using the simple object access protocol). In general, the interface includes any combination of the following characteristics: tightly coupled, loosely coupled, synchronous, and asynchronous. Further, the interface may conform to a standard protocol, a proprietary protocol, or any combination of standard and proprietary protocols.

The interfaces described herein may all be part of a single interface or may be implemented as separate interfaces or any combination therein. The interfaces may execute locally or remotely to provide functionality. Further, the interfaces may include additional or less functionality than illustrated or described herein.

In operation, computer 130 executes computer-executable instructions such as those illustrated in the figures to grant an application program access to a resource according to a privilege associated with the application program and with the resource. The systems and methods illustrated in the figures and described herein may be implemented in software or hardware or both using techniques some of which are well known in the art.

### Manifest Example

The following examples further illustrate the invention. While some of the examples below include a reference to a registry, embodiments of the invention are not limited to a registry. Embodiments of the invention are operable with any mechanism for storing system settings. Attributes are inherited with some mechanisms, while inheritance is not a guarantee with other mechanisms. Table 1 below lists exemplary privileges in a manifest and describes the type of resource protection associated with each of the levels.

**Table 1.**

| Exemplary Privileges. | |
|---|---|
| Privileges | Type of Protection |
| readOnlyIgnoreWrites | Read only - Files or settings associated with this privilege are modifiable only by the operating system when installing or servicing (e.g., upgrading). Other attempts to write to this file or setting are silently ignored (e.g., return a success response even though no write happens). |
| readOnlyFailWrites | Read only - Files or settings associated with this privilege are modifiable only by the operating system when installing or servicing (e.g., upgrading). Other attempts to write to this file or setting are explicitly ignored (e.g., return a failure response). |
| OSOnlyIgnoreWrites | Files or settings associated with this privilege are modifiable only by an operating system component. Other attempts to write to this file or setting are silently ignored (e.g., return a success response even though no write happens). |
| OSOnlyFailWrites | Files or settings associated with this privilege are modifiable only by an operating system component. Other attempts to write to this file or setting are explicitly ignored (e.g., return a failure response). |
| change recording | Different values stored for settings associated with this privilege will be retained on a per-application basis but visible on a global basis (last application which wrote). The current global value is rolled back using a most-recent-application algorithm upon application uninstall if the global value belongs to the application being uninstalled |
| application Virtualized | Changes to files or settings associated with this privilege are virtualized per application responsive to a write request from the application. |
| userVirtualized | Changes to files or settings associated with this privilege are virtualized per user responsive to a write request from the user. |
| applicationAndUserVirtualized | Changes to files or settings associated with this privilege are virtualized per user and per application responsive to a write request from the ..... user executing the application program. |
| notProtected | Files or system settings associated with this privilege have no protection or mitigation associated therewith. Any third party application |
| | or administrator with the appropriate permissions may modify these files and settings. |

In another example, a sample operating system component (e.g., "Comp Name") desires the following protection behavior for resources associated with the component.

**Table 2.**

| Example Directories and Desired Protection Behavior. | |
|---|---|
| Directory Name | Protection behavior |
| C:\Comp Name\ | Identity based access privileges |
| C:\Comp Name\Sub\ | App Virtual |
| C:\Common Files\Shared\Comp Name\ | Identity based access privileges (Fail Writes) |

**Table 3.**

| Example Files and Desired Protection Behavior. | | |
|---|---|---|
| Directory Name | File Name | Protection behavior |
| C:\ | CompName.dll | Identity based access privileges |
| C:\Comp Name\ | Sample.sys | Identity based access privileges |
| C:\Comp Name\Sub\ | CompName.dat | App Virtual |
| C:\Common Files\Shared\Comp Name\ | Common.dll | Identity based access privileges (Fail Writes) |
| C:\Common Files\Shared | Base.dll | App Virtual |

**Table 4.**

| Example Registry Keys and Desired Protection Behavior. | |
|---|---|
| Key Name | Protection behavior |
| HKLM\Software\Comp Name\ | Identity based access privileges |
| HKLM\Software\Comp Name\SubKey\ | Identity based access privileges |
| HKLM\Software\Comp Name\Settings\ | App Virtual |
| HKCR\.comp\ | Identity based access privileges |

**Table 5.**

| Example Registry Values and Desired Protection Behavior. | | |
|---|---|---|
| Key Name | Value Name | Protection behavior |
| HKLM\Software\Comp Name\ | Version | Identity based access privileges |
| HKLM\Software\Comp Name\SubKey\ | Sub Value | Identity based access privileges |
| HKCR\.comp\ | (Default) | Identity based access privileges |
| HKEY_USERS\.Default\Environment\ | MyEnv | Identity based access privileges |

The order of execution or performance of the methods illustrated and described herein is not essential, unless otherwise specified. That is, elements of the methods may be performed in any order, unless otherwise specified, and that the methods may include more or less elements than those disclosed herein.

When introducing elements of the present invention or the embodiment(s) thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. A computer-implemented method of granting an application program access to a resource on a computing system, said computer-implemented method comprising:
receiving a request from an application program for access to a resource identified in the request;
determining an application identifier for the application program;
identifying a privilege from a manifest as a function of the determined application identifier and the identified resource, said manifest indicating the privilege that the application program has for accessing the identified resource; and
granting the application program access to the identified resource according to the identified privilege.

2. The computer-implemented method of claim 1, wherein identifying the privilege from the manifest comprises identifying the privilege from the manifest, said manifest being associated with the application program.

3. The computer-implemented method of claim 1, wherein identifying the privilege from the manifest comprises identifying the privilege from the manifest, said manifest being associated with an operating system executing on the computing system.

4. The computer-implemented method of claim 1, wherein determining the application identifier for the application program comprises determining the application identifier associated with each of a plurality of files and system settings, said plurality of files and system settings representing the application program.

5. The computer-implemented method of claim 1, wherein granting the application program access to the identified resource comprises granting the application program read-only access to the identified resource.

6. The computer-implemented method of claim 1, wherein granting the application program access to the identified resource comprises denying the application program access to the identified resource.

7. The computer-implemented method of claim 1, wherein granting the application program access to the identified resource comprises generating a copy of the resource for use by the application program.

8. The computer-implemented method of claim 7, wherein the application program is to be installed on the computing system, and further comprising installing the application program on the computing system using the generated copy of the resource.

9. The computer-implemented method of claim 1, wherein the application program is to be installed on the computing system, and further comprising installing the application program on the computing system including applying a system setting to the computing system.

10. The computer-implemented method of claim 1, wherein receiving the request from the application program for access to the resource identified in the request comprises receiving the request from the application program for access to one or more of the following: a file, a directory, a named object, and a system setting.

11. The computer-implemented method of claim 1, further comprising generating the manifest based on one or more actions of the application program after installation of the application program.

12. A computer-implemented method of uninstalling a particular application program and associated system settings and objects from a computing system, said particular application program having at least one file associated therewith, said particular application program being one of a plurality of application programs installed on the computing system, said computer-implemented method comprising:
receiving a request to uninstall the particular application program;
determining an identifier associated with the particular application program;
identifying, via the determined identifier, a file associated only with the particular application program of the plurality of application programs, said identified file having the determined identifier associated therewith; and
deleting the identified file.

13. The computer-implemented method of claim 12, further comprising:
identifying, via the determined identifier, one or more resource changes applied in response to installing the particular application program; and
reverting the identified resource changes.

14. The computer-implemented method of claim 13, further comprising maintaining a log of the applied resource changes.

15. The computer-implemented method of claim 14, wherein identifying the one or more resource changes comprises identifying a file type association, and wherein reverting the identified resource changes comprises reverting the file type association to a previous association maintained in the log.

16. The computer-implemented method of claim 12, wherein identifying the file associated only with the particular application program of the plurality of application programs comprises identifying one or more objects associated only with the particular application program of the plurality of application programs.

17. One or more computer-readable media having computer-executable components for performing the computer-implemented method recited in any of the preceding claims.

18. A system for performing the computer-implemented method recited in any of the preceding claims.

19. A computer-readable medium having stored thereon a data structure representing a manifest specifying access rights of an application program to access a plurality of resources, said data structure comprising:
a first field storing a value representing an identity corresponding to the application program;
a second field storing a list of resources associated with the application program; and
a third field storing a privilege associated with the identity from the first field and with the list of resources stored in the second field, said privilege defining an access right of the application program to access each resource in the list of resources.

20. The computer-readable medium of claim 19, wherein the first field stores the value based on one or more of the following: a version, a central processing unit, and a public key.

21. The computer-readable medium of claim 19, wherein the second field stores the list of resources comprising one or more of the following: a file, a directory, a named object, and a system setting.

22. The computer-readable medium of claim 19, wherein the third field stores the privilege representing a declaration of intent.
